# EUROPÄISCHE PATENTSCHRIFT

(11) **EP 4 578 140 B1**
(45) Veröffentlichungstag und Bekanntmachung des Hinweises auf die Patenterteilung: **18.03.2026**
(21) Anmeldenummer: 23821900.0
(22) Anmeldetag: 22.11.2023
(51) Int. Cl.: H04L 9/32, H04L 9/40

(54) **SICHERES TECHNISCHES MODUL**
SECURE TECHNICAL MODULE
MODULE TECHNIQUE SÉCURISÉ

(30) Priorität: 23.11.2022 EP 22209142; 21.06.2023 EP 23180697
(43) Veröffentlichungstag der Anmeldung: 02.07.2025
(73) Patentinhaber: Siemens Aktiengesellschaft, 80333 München (DE)
(72) Erfinder: LUTZ, Benjamin, 76327 Pfinztal (DE); PALMIN, Anna, 76187 Karlsruhe (DE)
(74) Vertreter: Siemens Patent Attorneys
(86) Internationale Anmeldenummer: PCT/EP2023/082671
(87) Internationale Veröffentlichungsnummer: WO 2024/110524

(56) Entgegenhaltungen:
- EP-A1- 3 605 253
- EP-A1- 3 851 924
- SADASIVARAO ABHINAVA ET AL: "Optonomic: Architecture for Secure Autonomic Optical Transport Networks", 2019 IFIP/IEEE SYMPOSIUM ON INTEGRATED NETWORK AND SERVICE MANAGEMENT (IM), IFIP, 8 April 2019 (2019-04-08), pages 321 - 328, XP033552068

## Beschreibung

Die Erfindung betrifft ein Modul zur Erzeugung einer Bedienung und Beobachtung und/oder einer Automatisierung durch ein Leitsystem für eine technische Anlage. Außerdem betrifft die Erfindung ein Leitsystem für eine technische Anlage, insbesondere Prozess- oder Fertigungsanlage. Zudem betrifft die Erfindung ein technisches Modul, aufweisend eine Mehrzahl von technischen Geräten und ein computerimplementiertes Modulinventar, welches technische Modul zu einer Integration in ein Leitsystem für eine technische Anlage, insbesondere Prozess- oder Fertigungsanlage, ausgebildet ist.

Vor allem in der Pharmaindustrie und Spezialchemie bestehen hohe Anforderungen an Betreiber technischer Anlagen schnell auf geänderte Marktanforderungen reagieren zu können. Modulare Anlagen ermöglichen es den Anlagenbetreibern, die sogenannte "Time-to-Market" erheblich zu verkürzen und durch einen aufwandsarmen Umbau der Anlage schnell auf geänderte Marktbedingungen reagieren zu können. Die Anlagenbetreiber können sich hierzu einen Pool an modularen Einheiten (z.B. Prozesseinheiten) aufbauen, mithilfe dessen sie eine konkrete Anlage mittels der sogenannten Orchestrierung zusammenstellen können. Soll die Anlage umgebaut werden, so werden einzelne Module bzw. Package Units entnommen und durch andere, zum Beispiel leistungsfähigere Module bzw. Package Units ersetzt.

Unter einem technischen Modul bzw. einer Package Unit wird im vorliegenden Kontext ein Teil einer technischen Anlage verstanden, der in einem zentralen Engineering eines Leitsystems der technischen Anlage als eine abgeschlossene Einheit integriert werden kann. Module sind umfangreicher als einzelne Messstellen oder technische Einrichtungen. Unter einem Modul kann auch eine Teilanlage der technischen Anlage mit einer kompletten verfahrenstechnischen Struktur gefasst werden, die mehrere technische Einrichtungen (z.B. Tanks) umfasst, die wiederum mehrere Messstellen (z.B. Ventile, Monitore, Regler, Motoren...) beinhalten.

In der Druckschrift WO 2016/074730 A1 wird eine Methode beschrieben, wie eine modulare technische Anlage mittels Selbstbeschreibungsinformationen der Module erstellt werden kann. Diese Methode basiert auf online verfügbaren Selbstbeschreibungsinformationen der einzelnen Module.

Die EP 3 851 924 A1 offenbart ein Leitsystem für eine technische Anlage, insbesondere eine Fertigungs- oder Prozessanlage, das dazu ausgebildet und vorgesehen ist, im Rahmen eines Zertifikatsmanagements eine Vergabe und eine Revokation von Zertifikaten für Komponenten der technischen Anlage zu initiieren.

Durch den "Black Box"-Ansatz von technischen Modulen bleibt der innere Aufbau mit den installierten technischen Geräten dem Anwender verborgen - die Interaktion mit dem Modul beschränkt sich - im Fall eines Moduls für eine Prozessanlage - auf die Prozessanschlüsse und die Schnittstelle für die Orchestrierung.

Innerhalb des Moduls und auch für die erforderlichen Interaktionen nach außen ist es empfehlenswert, sichere Kommunikation (beispielsweise unter Verwendung von OPC UA) zu nutzen. Dies bedeutet, dass die einzelnen verbauten Geräte die entsprechenden Zertifikate benötigen. Diese Zertifikate sollten gemäß den gängigen Security-Empfehlungen von einer vertrauenswürdigen Zertifizierungsstelle (engl. Certificate Authority, CA) ausgestellt und signiert werden und nicht selbstsigniert (d.h. von den einzelnen Geräten selbst ausgestellt und signiert) sein.

Aufgrund des "Black Box"-Ansatzes kann der Anwender in der Regel nicht die Identität und die Originalität (engl. Originality) der in dem Modul verbauten technischen Geräte prüfen. Somit kann er sich beispielsweise nicht sicher sein, dass in einem Modul ein manipuliertes Gerät installiert ist, welches beim Betrieb des Moduls in der Einsatzumgebung Schaden anrichten kann.

Falls der Hersteller des technischen Moduls unter Verwendung seiner vertrauenswürdigen Zertifizierungsstelle die für die sichere Kommunikation erforderlichen Zertifikate für die verbauten Geräte ausgestellt und den Geräten zugewiesen hat, kann die (aus Security-Gründen empfohlene) regelmäßige Erneuerung dieser Zertifikate während des Betriebs des Moduls beim Anwender nur unter Verwendung derselben Zertifizierungsstelle und somit nur unter Einbezug des Herstellers. Auch bei einem Gerätetausch sollte das Ersatzgerät nach einer entsprechenden Prüfung mit den für die sichere Kommunikation notwendigen Zertifikaten ausgestattet sein. In den meisten Fällen besteht jedoch keine Verbindung zwischen der Einsatzumgebung und dem Hersteller.

Die in einem technischen Modul installierten Geräte (wie z.B. Industrial PCs, PLCs, Sensoren, Aktoren, HMI, Peripherie) verfügen oftmals über sichere digitale Identitäten in Form der sog. "Initial Device Identifiers" (IDevID), die während der Fertigung des Moduls durch den Hersteller auf die Geräte übertragen werden. Ein derartiger "Initial Device Identifier" umfasst gemäß der Norm IEEE 802.1AR einen privaten Schlüssel (engl. Secret Key, der sicher im Gerät hinterlegt ist. Zudem ist das dazugehörige IDevID-Zertifikat (das durch ein X.509-Zertifikat repräsentiert wird und u.a. den zugehörigen öffentlichen Schlüssel beinhaltet) und die dazugehörige Zertifikatskette (engl. Certificate Chain) umfasst. Die Zertifikatskette umfasst dabei als Vertrauensanker des Herstellers das Zertifikat der Zertifizierungsstelle (engl. Certification Authority, CA), die das IDevID-Zertifikat ausgestellt hat, und die Zertifikate aller übergeordneten Zwischenzertifizierungsstellen (engl. Intermediate CAs) bis hin zur Wurzelzertifizierungsstelle (engl. Root CA).

Durch die Validierung einer sicheren digitalen Identität (die häufig als Originalitätsprüfung, engl. Proof of Originality) bezeichnet wird, kann unter Verwendung eines adäquaten Verfahrens (im einfachsten Fall beispielsweise des TLS-Handshakes) geprüft werden, ob es sich beim jeweiligen Gerät um ein Originalgerät handelt, dessen ID und dessen öffentlicher Schlüssel zu dem im Gerät sicher hinterlegten privaten Schlüssel sowie dessen weitere Daten im IDevID-Zertifikat stammt.

Auch wenn man annimmt, dass der Hersteller selbst, der ein technisches Modul herstellt, die Identität/Originalität einzelner Geräte anhand deren IDevIDs geprüft hat, besteht sowohl auf dem Transportweg zum eigentlich Einsatzort des technischen Moduls, als auch im Rahmen der Inbetriebnahme / der Einbindung beim Anwender, als auch während des Betriebs beim Anwender die Gefahr eines unerkannten und unberechtigten Tauschs oder Manipulation der automatisierungstechnischen Geräte, die sich innerhalb des technischen Moduls befinden.

Dieses Problem wird dadurch verschärft, dass es dem Anwender generell nicht bekannt ist, welche Geräte genau innerhalb des technischen Moduls verbaut sind. Werden beispielsweise Geräte, die zu einer Produktfamilie eines bestimmten Herstellers gehören (beispielsweise aufgrund der Root CA-Kompromittierung) zurückgerufen, so bringt der Anwender diese Information nicht unbedingt mit einem von ihm betriebenen technischen Modul, in der ein solches Gerät verbaut ist, in Zusammenhang.

Nach dem aktuellen Stand der Technik ist es möglich, dass der Hersteller/OEM, der ein technisches Modul fertigt und diverse Geräte in diesem Modul verbaut, die notwendigen applikationsspezifischen Zertifikate (die insb. für die OPC UA-Kommunikation benötigt werden) von einer Hersteller-/OEM-PKI (inkl. der sog. Issuing CA) ausstellen lässt und auf die Geräte bringt. Dadurch wird sichergestellt, dass die sichere Kommunikation zwischen den verbauten Geräten unter Verwendung dieser Zertifikate möglich ist. Da die Gültigkeitsdauer dieser Zertifikate (die nach gängigen Empfehlungen vorzugsweise max. 2 Monate beträgt) vor der Inbetriebnahme oder während des Betriebs des technischen Moduls in der jeweiligen Einsatzumgebung ablaufen kann, sollte es eine Möglichkeit geben, die Zertifikate (vorzeitig, beispielsweise zwei Wochen vor dem Ablauf deren Gültigkeit) zu erneuern.

Der Erfindung liegt die Aufgabe zugrunde, ein einfaches und dabei sichereres Verfahren zum Erzeugen einer Bedienung und Beobachtung für eine technische Anlage unter Einbezug eines technischen Moduls anzugeben.

Diese Aufgabe wird gelöst durch ein Verfahren zur Erzeugung einer Bedienung und Beobachtung und/oder einer Automatisierung durch ein Leitsystem für eine technische Anlage, insbesondere Fertigungs- oder Prozessanlage, nach Anspruch 1. Außerdem wird die Aufgabe gelöst durch ein Leitsystem für eine technische Anlage, insbesondere Prozess- oder Fertigungsanlage nach Anspruch 6. Zudem wird die Aufgabe gelöst durch ein technisches Modul, aufweisend eine Mehrzahl von technischen Geräten und ein computerimplementiertes Modulinventar, welches technische Modul zu einer Integration in ein Leitsystem für eine technische Anlage, insbesondere Prozess- oder Fertigungsanlage, ausgebildet ist, nach Anspruch 7.

Ein erfindungsgemäßes Verfahren zur Erzeugung einer Bedienung und Beobachtung und/oder einer Automatisierung durch ein Leitsystem für eine technische Anlage, insbesondere Fertigungs- oder Prozessanlage, wobei das Leitsystem einen Operator Station Server und einen Operator Station Client aufweist, umfasst die folgenden Verfahrensschritte:
a) Integration eines technischen Moduls, welches eine abgeschlossene technische Einheit darstellt, in das als übergeordnete Steuerungsebene fungierende Leitsystem, wobei das technische Modul eine Mehrzahl von technischen Geräten, ein computerimplementiertes Modulinventar und eine, insbesondere als OPC UA ausgebildete, Schnittstelle aufweist, wobei das Leitsystem im Rahmen der Integration von dem computerimplementierten Modulinventar des technischen Moduls über die Schnittstelle Informationen abruft und in einem computerimplementierten, separat von dem technischen Modul realisierten Leitsysteminventar des Leitsystems hinterlegt, welche Informationen für eine Identifizierung der technischen Geräte des technischen Moduls durch das Leitsystem ausgebildet sind, und welche Informationen Zertifikate umfassen, anhand derer die Identifizierung des jeweiligen technischen Gerätes erfolgen kann,
b) Erzeugen der Bedienung und Beobachtung, und/oder der Automatisierung für die technische Anlage unter Berücksichtigung der in dem computerimplementierten Leitsysteminventar hinterlegten Informationen des technischen Moduls.

Unter einem technischen Modul wird eine abgeschlossene technische Einheit verstanden, die in eine übergeordnete Steuerungsebene integrierbar ist. Ein solches technisches Modul kann zum Beispiel ein Zusammenschluss mehrerer Messstellen oder ein größerer Anlagenteil einer industriellen Anlage sein. Das technische Modul muss aber nicht dem Feld der Industrieanlagen entstammen, sondern kann beispielsweise auch ein Motormodul eines Automobils, eines Schiffs oder dergleichen sein.

Unter einem Leitsystem wird im vorliegenden Kontext ein computergestütztes, technisches System verstanden, das Funktionalitäten zum Bedienen und Beobachten sowie Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einer Automatisierung wird die selbständige (automatisierte) Erfassung und Beeinflussung physikalischer Größen mithilfe technischer Mittel des Leitsystems verstanden. Dabei werden in der Regel Maschinen, Anlagen oder sonstige Einrichtungen in die Lage versetzt, selbsttätig zu arbeiten. Die Automatisierung umfasst wenigstens eine Parametrierung der Komponenten der technischen Anlage und eine Interaktion der Komponenten mit weiteren Komponenten.

Erfindungsgemäß sind in dem computerimplementierten Modulinventar Informationen hinterlegt, die für eine Identifizierung der technischen Geräte des technischen Moduls ausgebildet sind. Diese Informationen werden im Rahmen der Integration des technischen Moduls in das Leitsystem von dem Leitsystem über eine geeignete Schnittstelle, beispielsweise einen auf dem technischen Modul realisierten OPC-UA Server, aus dem Modulinventar des technischen Moduls ausgelesen und in ein Leitsysteminventar des Leitsystems übertragen. Unter Einbezug der abgerufenen Informationen erzeugt das Leitsystem die Bedienung und Beobachtung, also Visualisierungen, die ein Operator zum Bedienen und Beobachten der technischen Anlage, und insbesondere des technischen Moduls verwenden kann. Alternativ oder (in der Regel) zusätzlich erzeugt das Leitsystem auch eine Automatisierung für die technische Anlage, wobei auch hier die empfangenen Informationen bezüglich der einzelnen technischen Geräte des technischen Moduls berücksichtigt werden.

Erfindungsgemäß umfassen die Informationen Zertifikate, anhand derer die Identifizierung und eine Originalitätsprüfung bzw. eine Identitätsprüfung des jeweiligen Gerätes erfolgen kann. Die Identitätsprüfung bzw. die Originalitätsprüfung kann dabei in Interaktion mit dem jeweiligen technischen Gerät erfolgen. Das Leitsystem kann automatisiert eine Gültigkeit dieser Zertifikate auswerten und, für den Fall, dass eines der Zertifikate ungültig ist, das technische Modul von der Bedienung und Beobachtung, oder der Automatisierung für die technische Anlage ausschließen.

Die Zertifikate können von einer Zertifizierungsstelle eines Herstellers des technischen Moduls ausgestellt worden sein. Es ist aber auch möglich, dass das technische Modul über eine eigene Zertifizierungsstelle verfügt, die die identitätsnachweisenden Zertifikate für die einzelnen technischen Geräte ausgegeben hat.

Besonders bevorzugt umfassen die Informationen Zertifikatsketten für die technischen Geräte, welche jeweils ein Zertifikat derjenigen Zertifizierungsstelle, die das jeweilige Zertifikat für das jeweilige technische Gerät ausgestellt hat, sowie aller übergeordneter Zertifizierungsstellen umfassen. Falls die Zertifikate des technischen Moduls von einer modulinternen Zertifizierungsstelle ausgestellt worden sind, kann die entsprechende Zertifikatskette an das Leitsystem übermittelt werden, um es zu befähigen, die Zertifikatsvalidierung nach RFC5280 durchzuführen.

Im diesem bevorzugten Fall werden die Zertifikate für die in dem technischen Modul verbauten Geräte über eine geeignete Schnittstelle von einer Zertifizierungsstelle es Leitsystems bzw. der technischen Anlage bezogen. In diesem Fall entfällt der Aufwand zur integritätsgeschützten Übermittlung des sogenannten "Root CA"-Zertifikats an Kommunikationspartner des technischen Moduls, denn sie nutzen die gleiche Zertifizierungsstelle.

Die Informationen umfassen bevorzugt eine jeweilige Firmwareversion, eine Seriennummer, einen Aktualisierungsbedarf einer Betriebssoftware, einen Herstellernamen, eine Gerätefamilie, eine IP-Adresse, eine MAC-Adresse, einen Zeitpunkt einer Originalitätsprüfung und/oder einen Zeitpunkt einer manuell durchgeführten Identifizierung des jeweiligen technischen Gerätes.

Die Aufgabe wird zudem gelöst durch ein Leitsystem für eine technische Anlage, insbesondere Prozess- oder Fertigungsanlage, das dazu ausgebildet ist, ein Verfahren wie zuvor erläutert durchzuführen.

Außerdem wird die Aufgabe gelöst durch ein technisches Modul, aufweisend eine Mehrzahl von technischen Geräten, eine, insbesondere als OPC UA ausgebildete, Schnittstelle und ein computerimplementiertes Modulinventar, welches technische Modul zu einer Integration in ein Leitsystem wie zuvor erläutert für eine technische Anlage, insbesondere Prozess- oder Fertigungsanlage, ausgebildet ist. In dem computerimplementierten Modulinventar des technischen Moduls sind dabei Informationen hinterlegt, die für eine Identifizierung der technischen Geräte des technischen Moduls durch einen Abruf der Informationen über die Schnittstelle durch das Leitsystem ausgebildet sind, und welche Informationen Zertifikate umfassen, anhand derer die Identifizierung des jeweiligen technischen Gerätes erfolgen kann.

Dabei umfassen die Informationen Zertifikate, anhand derer (und deren zugehörigen, im jeweiligen technischen Gerät sicher hinterlegten privaten Schlüssels bzw. Geheimschlüssels zu dem im jeweiligen Zertifikat hinterlegten öffentlichen Schlüssel) die Identifizierung des jeweiligen Gerätes erfolgen kann. Eine Identitäts-/Originalitätsprüfung erfolgt in der Regel nicht nur durch die Verifikation des Zertifikats. Sie beinhaltet normalerweise noch einen Schritt, bei dem das jeweilige Gerät beweist, dass es den privaten Schlüssel zum öffentlichen Schlüssel, der im Zertifikat enthalten ist, kennt. Das Leitsystem kann automatisiert eine Gültigkeit dieser Zertifikate auswerten und, für den Fall, dass eines der Zertifikate ungültig ist, das technische Modul von der Bedienung und Beobachtung, oder der Automatisierung für die technische Anlage ausschließen.

Die Zertifikate können von einer Zertifizierungsstelle eines Herstellers des technischen Moduls ausgestellt worden sein. Es ist aber auch möglich, dass das technische Modul über eine eigene Zertifizierungsstelle verfügt, die die identitätsnachweisenden Zertifikate für die einzelnen technischen Geräte ausgegeben hat.

Besonders bevorzugt umfassen die Informationen Zertifikatsketten für die technischen Geräte, welche jeweils ein Zertifikat derjenigen Zertifizierungsstelle, die das jeweilige Zertifikat für das jeweilige technische Gerät ausgestellt hat, sowie aller übergeordneter Zertifizierungsstellen umfassen.

Bevorzugt umfassen die Informationen sogenannte Zertifikatssperrlisten für die technischen Geräte, welche jeweils von der Zertifizierungsstelle ausgestellt wurden, die das jeweilige Zertifikat für das jeweilige technische Gerät ausgestellt hat. Die Zertifikatssperrlisten umfassen dabei Zertifikate, die von der jeweiligen Zertifizierungsstelle revoziert, d.h. für ungültig erklärt wurden.

Im Rahmen einer bevorzugten Weiterbildung des technischen Moduls erfüllen die Informationen die strukturellen und inhaltlichen Anforderungen der VDI/VDE/NAMUR Richtlinie 2658 mit Stand zum Anmeldezeitpunkt der vorliegenden Patentanmeldung. Dies bedeutet unter anderem, dass die Informationen zusätzlich zu den Identitätsinformationen bezüglich der in dem technischen Modul verbauten technischen Geräte die folgenden Bestandteile aufweisen:
- Anlagenbilder (in einem standardisierten Format), die für das Bedienen und Beobachten der in dem technischen Modul enthaltenen technischen Geräte durch das Leitsystem bereitgestellt und von einem Operator Station Client des Leitsystems visualisiert werden;
- Eine Schnittstellenbeschreibung des technischen Moduls zur Bedienung, Beobachtung und Automatisierung des technischen Moduls im Verbund mit anderen Anlagenteilen der technischen Anlage, die neben Prozesswerten und Alarmen auch sogenannte Services beinhalten kann;
- Eine strukturelle Beschreibung des technischen Moduls, beispielsweise verschieden verfahrenstechnische Bereiche wie ein Puffertank, ein Reaktor, ein Mischer und dergleichen. Die Anlagenbilder und Schnittstellen werden dann entsprechend auf die strukturelle Beschreibung abgebildet - ein Signal zum Steuern des Mischers beispielsweise wird dem Operator über ein Anlagenbild des Mischers angeboten.

Diese gemäß der VDI/VDE/NAMUR Richtlinie 2658 bereits unter dem Namen "Module Type Package" bekannte Struktur wird im Rahmen der vorliegenden Erfindung um die identitätsanzeigenden Informationen erweitert. Diese können folgende Informationen umfassen:
- Hersteller (z.B. Siemens)
- Gerätefamilie (z.B. S7-1500 CPU)
- Geräte-ID, z.B. Seriennummer (z.B. XYZ)
- Hardware-Version (z.B. 10007)
- Firmware-Version (z.B. R29.44.53_00.00.00.00)
- IP-Adresse (z.B. 172.27.232.44)
- MAC-Adresse (z.B. 28:63:36:8D:C4:2A)
- IDevID-Zertifikat (falls vorhanden) (z.B. als eine CER-/DER-Datei abgelegt)
- LDevID-Zertifikate (falls vorhanden) wie z.B. das gerätespezifische LDevID-Generic-Zertifikat oder verschiedene applikationsspezifische LDevID-App-Zertifikate, die in der Einsatzumgebung (genauer gesagt von der innerhalb des Moduls oder innerhalb der Einsatzumgebung, also der technischen Anlage, betriebenen Public Key Infrastructure (PKI) bzw. von einem vergleichbaren Service für verschiedene Zwecke für das Gerät ausgestellt wurden und automatisch (z.B. unter Verwendung eines standardisierten Mechanismus wie z.B. OPC UA GDS Push/Pull oder eines Protokolls wie z.B. Certificate Management Protocol (CMP) )oder manuell auf das Gerät gebracht wurden. Dabei können sich die einzelnen PKI-Komponenten (z.B. eine Registrierungsstelle oder ein lokaler Registrierungsdienst, deren Rolle beispielsweise der OPC UA Global Discovery Server übernehmen kann) innerhalb des technischen Moduls und/oder außerhalb des technischen Moduls befinden und vom Anlagenbetreiber/einem adäquaten Serviceanbieter betrieben werden.
- "Proof of Originality", abgekürzt "PoO" (z.B. 08:32, 28.12.2022) als Zeitpunkt der sog. Originalitätsprüfung, die in der Regel insbesondere die Validierung des IDevID-Zertifikats des Gerätes und somit dessen Identität/Originalität beinhaltet und mit/ohne Benutzer-Unterstützung erfolgen kann, wobei sie beispielsweise einen obligatorischen Schritt im Rahmen des sog. Secure Device Onboardings darstellt.
- "Identification" (z.B. 09:33, 28.12.2022) als Zeitpunkt der Identifizierung des Gerätes, die beispielsweise durch den (beispielsweise von einem berechtigten Benutzer vorgenommenen) Scan des auf dem Gehäuse des Gerätes aufgedruckten QR-Codes erfolgen kann. Im Rahmen dieses Vorgangs können die Gerätedaten ausgelesen und dem Benutzer angezeigt werden, die er anschließend mit den verfügbaren Informationen abgleichen kann. Dabei ist es wichtig zu beachten, dass ein Gerät im Rahmen der Identifizierung seine Identität zwar behaupten, jedoch nicht (wie beim oben erläuterten Proof of Originality) beweisen kann. Somit gilt diese Option im Hinblick auf Cyber Security als weniger fundiert. Für die bestehenden Geräte bzw. Altgeräte ist es aus Security-Sicht sehr empfehlenswert, zumindest eine Identifizierung mit der Unterstützung des Benutzers zu ermöglichen oder sogar zu erzwingen.

Bevorzugt weist das technische Modul einen computerimplementierten Registrierungsdienst auf, welcher dazu ausgebildet ist, aufgrund einer manuellen Aufforderung oder automatisiert zu bestimmten Zeitpunkten oder ereignisgesteuert innerhalb des technischen Moduls die Informationen bezüglich der technischen Geräte zu ermitteln und in dem computerimplementierten Modulinventar zu hinterlegen.

Neben der o.g. Identitätsprüfung kann der computerimplementierte Registrierungsdienst weitere adäquate, ggf. konfigurierbare Prüfungsschritte beinhalten. Beispielsweise können sowohl für die Inbetriebnahme als auch beim Gerätetausch zur Laufzeit bestimmte Abgleiche der technischen Daten/Eigenschaften des Gerätes mit einem Referenzgerät erfolgen. Der Registrierungsprozess kann entweder automatisch ausgelöst werden (beispielsweise dadurch, dass die verbauten Geräte den Registrierungsdienst, beispielsweise unter Verwendung eines geeigneten Discovery Verfahrens wie z.B. mDNS oder unter Verwendung von vorkonfigurierten Adressdaten, finden) oder von einem Benutzer getriggert werden.

Der Registrierungsdienst kann auch aufgrund einer manuellen Aufforderung, aufgrund eines Austauschs eines der technischen Geräte oder automatisiert zu bestimmten Zeitpunkten oder ereignisgesteuert innerhalb des technischen Moduls die Informationen bezüglich der technischen Geräte ermitteln, eine Identitäts- bzw. Originalitätsprüfung der Geräte durchführen und die Informationen bzgl. der technischen Geräte samt einem Status der Identitäts-/Originalitätsprüfung und/oder einem entsprechenden Flag in dem computerimplementierten Modulinventar hinterlegen.

Besonders bevorzugt ist der Registrierungsdienst dazu ausgebildet, durch einen Austausch eines der technischen Geräte in dem technischen Modul dazu getriggert zu werden, die Informationen bezüglich der technischen Geräte zu ermitteln und in dem computerimplementierten Modulinventar zu hinterlegen. Ein Trigger zum Aufruf des Registrierungsdienstes kann demnach ein erkannter und entsprechend gemeldeter Gerätetausch zur Laufzeit des technischen Moduls bzw. der technischen Anlage sein, bei dem das in dem technischen Modul eingebaute Ersatzgerät entsprechend registriert werden sollt. Wird dabei festgestellt, dass ein (beispielsweise im Rahmen der Erstinbetriebnahme oder des Gerätetauschs) verbautes Gerät über ein ungültiges und/oder abgelaufenes IDevID-Zertifikat verfügt, so wird der Benutzer entsprechend informiert oder eine entsprechende Policy beim Auslösen einer anderen adäquaten Aktion mitberücksichtigt. Falls die Identitätsprüfung anhand der IDevID-Zertifikate der verbauten Geräte erfolgreich verläuft, werden alle Geräte samt deren geprüften Zertifikate in das Modulinventar aufgenommen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: ein erfindungsgemäßes technisches Modul in einer schematischen Darstellung;
- FIG 2: ein Objektmodell des technischen Moduls; und
- FIG 3: ein erfindungsgemäßes Leitsystem in einer schematischen Darstellung.

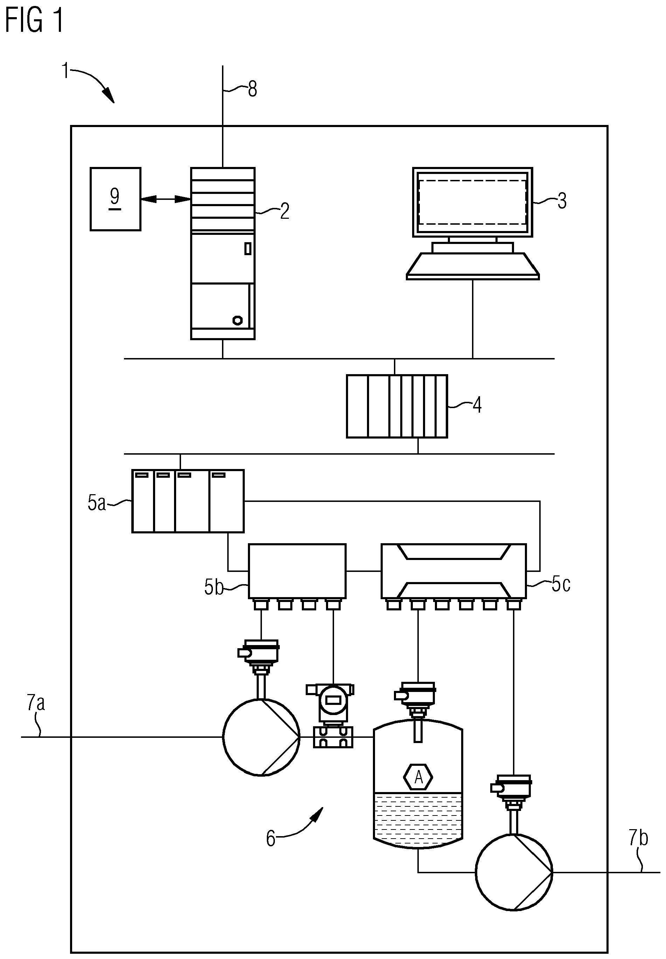

In FIG 1 ist ein technisches Modul 1 dargestellt, welches einen Server 2, ein Visualisierungsgerät 3, ein Automatisierungsgerät 4, Peripheriegeräte 5a, 5b, 5c und eine Mehrzahl von Sensoren sowie Aktoren 6. Zudem weist das technische Modul 1 Anschlüsse 7a, 7b zum Anschluss (z.B. verfahrenstechnisch) an weitere technische Module bzw. an Komponenten einer technischen Anlage, beispielsweise Prozessanlage, auf. Weiterhin weist das technische Modul 1 eine Schnittstelle 8 auf.

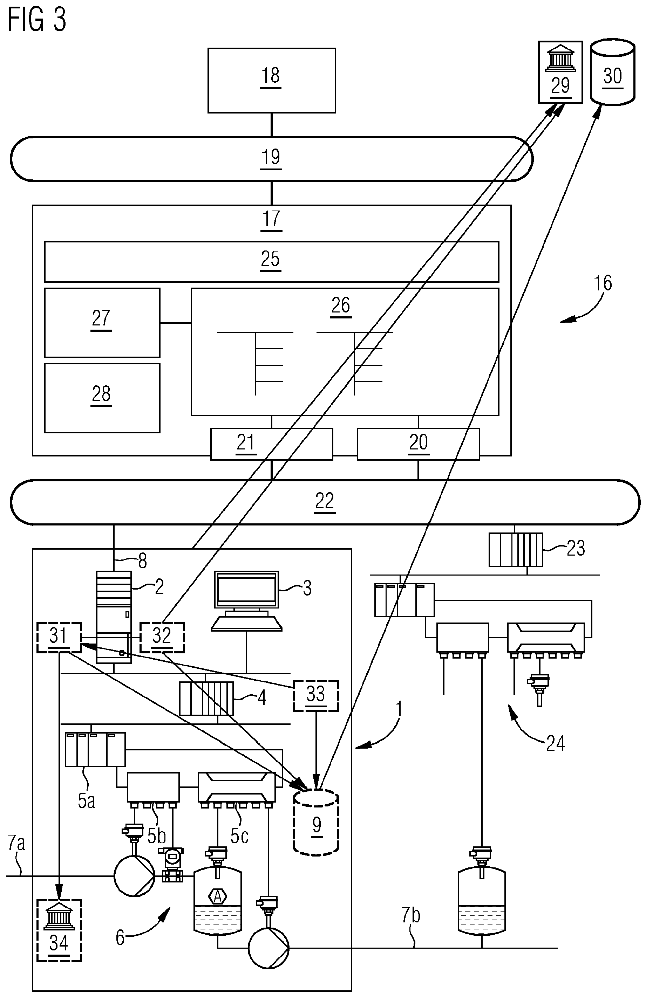

Über die Schnittstelle 8 kann das technische Modul 1 mit einer übergeordneten Steuerungsebene wie einem Leitsystem (vgl. FIG 3) verbunden werden. Die Schnittstelle 8 kann beispielsweise einen OPC UA Server umfassen, welcher die für die Software-Integration des technischen Moduls 1 in das Leitsystem verwendet werden kann.

In dem technischen Modul 1, beispielsweise in dem Server 2, ist ein Modulinventar 9 computerimplementiert. In dem Modulinventar 9 des technischen Moduls 1 sind Informationen hinterlegt, die für eine Identifizierung der technischen Geräte 2, 3, 4, 5a, 5b, 6 des technischen Moduls 1 durch das Leitsystem ausgebildet sind.

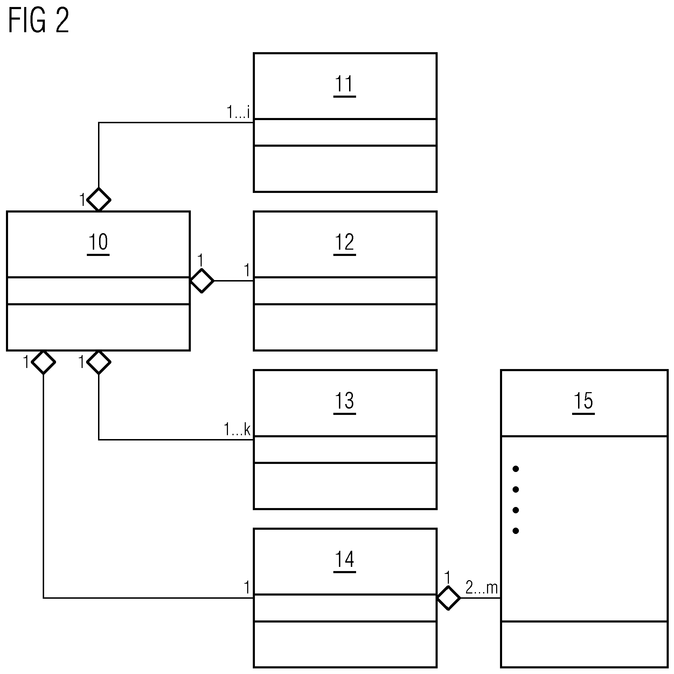

Die Informationen erfüllen die strukturellen und inhaltlichen Anforderungen der VDI/VDE/NAMUR Richtlinie 2658 mit Stand zum Anmeldezeitpunkt der vorliegenden Patentanmeldung. Ein Objektmodell der Informationen bezüglich des technischen Moduls 1 ist in FIG 2 dargestellt. Gemäß der Richtlinie VDI/VDE/NAMUR 2658 umfasst die Beschreibung 10 des technischen Moduls 1 Anlagenbilder 11, Schnittstellen 12 und einen groben strukturellen Aufbau 13 des technischen Moduls 1.

Zusätzlich umfasst die Beschreibung eine Inventarisierung 14 der technischen Geräte 2, 3, 4, 5a, 5b, 6 des technischen Moduls 1. Die Inventarisierung 14 umfasst eine Auflistung 15 über alle in dem technischen Modul 1 enthaltenen Geräte 2, 3, 4, 5a, 5b, 6, welche Auflistung 15 einem mit dem technischen Modul 1 verbundenen Leitsystem eine Identifizierung der technischen Geräte 2, 3, 4, 5a, 5b, 6 des technischen Moduls 1 ermöglicht.

In FIG 3 ist ein Leitsystem 16 für die Bedienung und Beobachtung einer als Prozessanlage ausgebildeten technischen Anlage schematisch dargestellt. Das Leitsystem 16 umfasst einen Operator Station Server 17 und einen Operator Station Client 18. Der Operator Station Server 17 und der Operator Station Client 18 sind über einen Terminalbus 19 miteinander und optional mit nicht dargestellten weiteren Komponenten des Leitsystems 16 wie einem Archivserver verbunden.

Ein Benutzer bzw. Operator kann zum Zwecke des Bedienens und Beobachtens über den Operator Station Client 18 mittels des Terminalbus 19 auf den Operator Station Server 17 zugreifen. Der Terminalbus 19 kann, ohne sich darauf zu beschränken, beispielsweise als Industrial Ethernet ausgebildet sein.

Der Operator Station Server 17 weist eine Geräteschnittstelle 20 und einen OPC UA Server 21 auf, die mit einem Anlagenbus 22 verbunden ist. Über die Geräteschnittstelle 20 ist der Operator Station Server 17 mit einem Automatisierungsgerät 23 sowie mit weiteren Komponenten der verfahrenstechnischen Anlage wie Peripheriegeräten 24 verbunden und kann mit diesen kommunizieren. Diese weiteren Komponenten befinden sich außerhalb des technischen Moduls 1. Das technische Modul 1 ist über den Prozessanschluss 7b (lösbar) mit den weiteren Komponenten 24 der technischen Anlage verbunden. Der Anlagenbus 22 kann, ohne sich darauf zu beschränken, beispielsweise als Industrial Ethernet ausgebildet sein.

Auf dem Operator Station Server 17 sind weiterhin ein Visualisierungsdienst 25, ein Prozessabbild 26, ein Orchestrierungsdienst 27 und ein Zertifikatsüberwachungsdienst 28. In dem Prozessabbild 26 ist jeweils eine Momentaufnahme der (Signal-)Zustände der verbundenen Geräte 24 und/oder Applikationen hinterlegt. Der Orchestrierungsdienst 27 ist zur (softwareseitigen) Integration des technischen Moduls 1 in die Bedienung und Beobachtung sowie die Automatisierung der technischen Anlage ausgebildet. Mit anderen Worten führt der Orchestrierungsdienst 27 die Orchestrierung, d.h. die Aussteuerung des technischen Moduls 1 und die Koordination des technischen Moduls 1 mit der technischen (verfahrenstechnischen) Anlage durch. Für die Orchestrierung werden hierbei die Prozesswerte und Services des technischen Moduls 1 über das Prozessabbild 26 des Operator Station Servers 17 und des OPC UA Servers 21 durch den Orchestrierungsdienst 27 gelesen und geschrieben. Die übergeordnete Bedienung und Beobachtung durch einen Operator erfolgt über den Operator Station Client 18, in dem die für die Bedienung und Beobachtung notwendigen Anlagenbilder sowohl für das technische Modul 1 als auch für die restlichen Teile der (verfahrens-)technischen Anlage visualisiert werden. Der Zertifikatsüberwachungsdienst 28 überwacht die Gültigkeit der Zertifikate der technischen Geräte 2, 3, 4, 5a, 5b, 5c, 6 des technischen Moduls 1, worauf im weiteren Verlauf noch näher eingegangen wird. Die technische Anlage weist darüber hinaus einen Zertifizierungsstelle 29 und ein Leitsysteminventar 30 auf.

Der in dem Operator Station Server 17 integrierte Visualisierungsdienst 25 initiiert eine Übertragung von Visualisierungsinformationen an den Operator Station Client 18. Der Operator Station Client 18 wiederum ist dazu ausgebildet, eine Visualisierung, d.h. eine grafische Darbietung, insbesondere von Anlagenbildern und Hierarchien, zum Bedienen und Beobachten der Prozessanlage darzustellen.

Wie zuvor bereits ausgeführt, ist in dem technischen Modul 1 ein Modulinventar 9 computerimplementiert. In dem Modulinventar 9 des technischen Moduls 1 sind Informationen hinterlegt, die für eine Identifizierung der technischen Geräte 2, 3, 4, 5a, 5b, 6 des technischen Moduls 1 durch das Leitsystem ausgebildet sind. Das technische Modul 1 weist zudem einen computerimplementierten Registrierungsdienst 31, einen Zertifikatsmanagementdienst 32, einen Überwachungsdienst 33 und eine in dem technischen Modul integrierte Modulzertifizierungsstelle 34 auf.

Der Registrierungsdienst 31 ist dafür ausgelegt, eine Identität der in dem technischen Modul vorhandenen technischen Geräte 2, 3, 4, 5a, 5b, 6 zu ermitteln und zu verifizieren bzw. zu validieren. Dies erfolgt beispielsweise anhand deren DevID-Zertifikate. Diese können beispielsweise die vom Hersteller des technischen Moduls 1 ausgestellten IDevID-Manufacturer-Zertifikate oder die vom OEM ausgestellten LDevID-OEM-Zertifikate sein. Die Identitäten der technischen Geräte 2, 3, 4, 5a, 5b, 6 samt deren Zertifikate werden von dem Registrierungsdienst 31 in dem Modulinventar 9 hinterlegt. Neben der o.g. Identitätsprüfung kann der Registrierungsdienst weitere adäquate, ggf. konfigurierbare Prüfungsschritte vornehmen. Beispielsweise können sowohl bei der Inbetriebnahme als auch beim Gerätetausch zur Laufzeit bestimmte Abgleiche der technischen Daten/Eigenschaften der technischen Geräte 2, 3, 4, 5a, 5b, 6 mit einem Referenzgerät erfolgen. Die Rolle des Referenzgerätes übernimmt beim Gerätetausch zur Laufzeit beispielsweise das jeweilige ursprünglich verbaute Gerät, dass ersetzt werden soll.

Dabei kann der Registrierungsprozess entweder automatisch ausgelöst werden. Dies erfolgt beispielsweise dadurch, dass die verbauten Geräte den Registrierungsdienst 31, beispielsweise unter Verwendung eines geeigneten Discovery Verfahrens wie z.B. mDNS oder unter Verwendung von vorkonfigurierten Adressdaten ermitteln und ihm die Identifizierungsdaten übermitteln. Alternativ kann der Prozess auch von einem Benutzer oder durch einen anderen Prozess ausgelöst werden.

Ein weiterer Trigger zum Aufruf des Registrierungsdienstes 31 kann ein von dem Überwachungsdienst 33 erkannter und entsprechend gemeldeter Gerätetausch zur Laufzeit des technischen Moduls 1 sein, bei dem das in das technische Modul 1 integrierte Ersatzgerät entsprechend registriert werden soll. Wird dabei festgestellt, dass ein (beispielsweise im Rahmen der Erstinbetriebnahme oder des Gerätetauschs) verbautes technisches Gerät 2, 3, 4, 5a, 5b, 5c, 6 über ein ungültiges und/oder abgelaufenes IDevID-Zertifikat verfügt, so wird der Benutzer entsprechend informiert oder eine entsprechende Policy beim Auslösen einer anderen adäquaten Aktion mitberücksichtigt. Falls die Identitätsprüfung anhand der IDevID-Zertifikate der verbauten technischen Geräte 2, 3, 4, 5a, 5b, 5c, 6 erfolgreich verläuft, werden alle technischen Geräte 2, 3, 4, 5a, 5b, 5c, 6 samt deren geprüften Zertifikate in das Modulinventar 9 aufgenommen.

Das Modulinventar 9 repräsentiert eine Übersicht der in dem technischen Modul 1 verbauten technischen Geräte 2, 3, 4, 5a, 5b, 5c, 6 samt deren IDevID- bzw. LDevID-Zertifikate (wobei die LDevID-Zertifikate einerseits die sog. gerätespezifischen LDevID-Generic-Zertifikate und andererseits die sog. applikationsspezifischen LDevID-App-Zertifikate umfassen können). Das Modulinventar 9 wird nach dem erstmaligen Anlegen während des gesamten Lebenszyklus des technischen Moduls 1 durch die Zertifikate (die beim Zusammenbauen der Package Unit vom OEM und bei der Inbetriebnahme/ Orchestrierung beim Anwender ausgestellt werden) ergänzt und stets aktuell gehalten. Neben den gerätespezifischen Daten und den Zertifikaten wird in dem Modulinventar 9 der Status der letzten Identitätsprüfung festgehalten. Beispielsweise wird dabei die vom OEM durchgeführte Identitätsprüfung als "Proof of Initial Device Identity" und die vom Anwender bzw. in der Einsatzumgebung des Anwenders im Rahmen der Orchestrierung durchgeführte Prüfung als "Proof of Locally-Significant OEM Device Identity" bezeichnet.

Der Zertifikatsmanagementdienst 32 ist insbesondere dafür zuständig, ein modulspezifisches oder einsatzumgebungsspezifisches LDevID-Generic -Zertifikat auszurollen. Dabei wird dieses Zertifikat entweder bei der internen, in dem technischen Modul verbauten Zertifizierungsstelle 34 oder bei der Zertifizierungsstelle 29 der technischen Anlage, in die das technische Modul 1 integriert wird, beantragt. Überdies ist dieser Dienst auch dafür zuständig, gemäß dem von dem Überwachungsdienst 33 gemeldeten Monitoring-Status die Zertifikatserneuerung oder Revokation für die technischen Geräte 2, 3, 4, 5a, 5b, 5c, 6 anzustoßen und die erneuerten / revozierten Zertifikate auch an das Modulinventar 9 zu melden.

Um das Ausrollen von gerätespezifischen und applikationsspezifischen Zertifikaten zu ermöglichen, wird in dem technischen Modul 1 die Zertifizierungsstelle 34 (ggf. mit dazugehörigen weiteren Zertifizierungsdiensten) sowie mit der OPC UA Schnittstelle 8 eine geeignete Schnittstelle bereitgestellt, über die das technische Modul 1 in die jeweilige Einsatzumgebung (und insbesondere in die in dieser Einsatzumgebung betriebene Public Key Infrastruktur) integriert werden kann. In einem bevorzugten Fall wird die o.g. Schnittstelle 8 durch das Aufsetzen einer zertifikatsbasierten Vertrauensbeziehung zwischen dem Registrierungsdienst 31 und der Zertifizierungsstelle 29 der Einsatzumgebung des Anwenders aktiviert. Das Aufsetzen der Vertrauensbeziehung kann im Rahmen der Orchestrierung des technischen Moduls 1 beim Anwender erfolgen. Dabei ist es wichtig zu beachten, dass jedes technische Modul 1 in der Regel über mindestens eine zertifikatsbasierte Kommunikationsbeziehung zu Geräten außerhalb des technischen Moduls 1 verfügt.

Falls das zur Absicherung dieser Kommunikationsbeziehung verwendete Zertifikat des technischen Moduls 1 von der internen Zertifizierungsstelle 34 ausgestellt wurde, soll die entsprechende Zertifikatskette inkl. des integritätsgeschützten Root CA-Zertifikats an die Kommunikationspartner des technischen Moduls 1 übermittelt werden, um sie zu befähigen, die Zertifikatsvalidierung nach RFC5280 durchzuführen.

Alternativ werden die Zertifikate für die in dem technischen Modul verbauten, technischen Geräte 2, 3, 4, 5a, 5b, 5c, 6 über die oben beschriebene Schnittstelle 8 von der Zertifizierungsstelle 29 des Anwenders bezogen. In diesem Fall entfällt der Aufwand zur integritätsgeschützten Übermittlung des Root CA-Zertifikats an die Kommunikationspartner, denn sie nutzen die gleiche Public Key Infrastruktur.

Das technische Modul 1 kann infolge einer erfolgreichen, von dem Registrierungsdienst 31 durchgeführten Identitätsprüfung der einzelnen verbauten technischen Geräte 2, 3, 4, 5a, 5b, 5c, 6 vom Hersteller/OEM, der sie zusammengebaut und erfolgreich getestet hat (genauer gesagt von dessen sicher betriebenen Issuing CA) ein modulspezifisches IDevID-bzw. LDevID-Zertifikat ausgestellt bekommen. Dabei erfolgt die Beantragung dieses Zertifikats unter Verwendung des Zertifikatsmanagementdienstes 32 unter Berücksichtigung der Einträge im Modulinventar 9 sowie dem von dem Überwachungsdienst 33 erfassten Status.

Sobald vom Überwachungsdienst 33 eine nicht akzeptable Änderung, die die Vertrauenswürdigkeit des technischen Moduls 1 gemäß den vorliegenden Policies negativ beeinflusst, gemeldet wird, wird das o.g. modulspezifische IDevID-bzw. LDevID-Zertifikat - ggf. in Rücksprache mit dem Benutzer - revoziert. Bei der Kommunikation der anderen, in der jeweiligen Einsatzumgebung verbauten Geräte mit dem technischen Modul 1 wird im Rahmen einer zusätzlichen Prüfung das o.g. modulspezifische Zertifikat geprüft. Auf diese Art und Weise kann (falls erforderlich mit sofortiger Wirkung) unterbunden werden, dass ein sich als nicht vertrauenswürdig erwiesenes technisches Modul 1 mit den anderen Geräten in der technischen Anlage kommuniziert und ggf. Schaden einrichtet.

Der "Private Key" zum o.g. modulspezifischen IDevID-bzw. LDevID-Zertifikat wird in einem Hardware- oder Software Secure Element eines in dem technischen Modul 1 verbauten technischen Gerätes 2, 3, 4, 5a, 5b, 5c, 6 hinterlegt. Das gleiche Secure Element, das bereits von dem einen technischen Gerät 2, 3, 4, 5a, 5b, 5c, 6 genutzt wird, in der der Private Key hinterlegt ist, wird auch von dem gesamten technischen Modul 1 für die sichere Ablage des Private Keys genutzt. In diesem Fall wird beim Gerätetausch zur Laufzeit im Falle der erfolgreichen durch den Registrierungsdienst 31 durchgeführten Prüfungen nicht nur für das jeweilige technische Gerät 2, 3, 4, 5a, 5b, 5c, 6, sondern zusätzlich auch für das gesamte technische Modul 1 ein Schlüsselpaar neu generiert und ein Zertifikat beantragt. Alternativ kann der o.g. "Private Key" in einem in dem technischen Modul 1 separat und sicher verbauten Hardware oder Software Secure Element hinterlegt werden.

Die beschriebenen Dienste 31, 32, 33 des technischen Moduls 1 werden auf geeigneten Komponenten/Geräten (wie z.B. einem IoT-Gerät) lokalisiert. Dabei ist es zwar möglich, dass die bereits verbauten und zu einem anderen Zweck verwendeten technischen Geräten 2, 3, 4, 5a, 5b, 5c, 6 als Plattform für die o.g. Dienste 31, 32, 33 verwendet werden. Es erweist sich jedoch insbesondere im Hinblick auf Cyber Security und Verfügbarkeit als sinnvoll, als Plattform für diese Dienste 31, 32, 33 ein dediziertes Gerät zu verwenden - und dieses Gerät in dem technischen Modul 1 zu verbauen oder über eine geeignete Schnittstelle oder mehrere geeignete Schnittstellen in der jeweiligen Einsatzumgebung bereitzustellen.

## Patentansprüche

1. Verfahren zur Erzeugung einer Bedienung und Beobachtung und/oder einer Automatisierung durch ein Leitsystem (16) für eine technische Anlage, insbesondere Fertigungs- oder Prozessanlage, wobei das Leitsystem (16) einen Operator Station Server (17) und einen Operator Station Client (18) aufweist, das Verfahren umfassend:
a) Integration eines technischen Moduls (1), welches eine abgeschlossene technische Einheit darstellt, in das als übergeordnete Steuerungsebene fungierende Leitsystem (16), wobei das technische Modul (1) eine Mehrzahl von technischen Geräten (2, 3, 4, 5a, 5b, 5c, 6), ein computerimplementiertes Modulinventar (9) und eine, insbesondere als OPC UA ausgebildete, Schnittstelle (8) aufweist, wobei das Leitsystem (16) im Rahmen der Integration von dem computerimplementierten Modulinventar (9) des technischen Moduls (1) über die Schnittstelle (8) Informationen abruft und in einem computerimplementierten, separat von dem technischen Modul (1) realisierten Leitsysteminventar (30) des Leitsystems (16) hinterlegt, welche Informationen für eine Identifizierung der technischen Geräte (2, 3, 4, 5a, 5b, 5c, 6) des technischen Moduls (1) durch das Leitsystem (16) ausgebildet sind, und welche Informationen Zertifikate umfassen, anhand derer die Identifizierung des jeweiligen technischen Gerätes (2, 3, 4, 5a, 5b, 5c, 6) erfolgen kann,
b) Erzeugen der Bedienung und Beobachtung, und/oder der Automatisierung für die technische Anlage unter Berücksichtigung der in dem computerimplementierten Leitsysteminventar (30) hinterlegten Informationen des technischen Moduls (1).

2. Verfahren nach Anspruch 1, bei dem das Leitsystem (16) automatisiert eine Gültigkeit der Zertifikate auswertet und, für den Fall, dass eines der Zertifikate ungültig ist, das technische Modul (1) von der Bedienung und Beobachtung, oder der Automatisierung für die technische Anlage ausschließt.

3. Verfahren nach Anspruch 1 oder 2, wobei die Zertifikate von einer Zertifizierungsstelle eines Herstellers des technischen Moduls (1) ausgestellt worden sind.

4. Verfahren nach einem der Ansprüche 2 oder 3, bei dem die Informationen Zertifikatsketten für die technischen Geräte (2, 3, 4, 5a, 5b, 5c, 6) umfassen, welche jeweils ein Zertifikat derjenigen Zertifizierungsstelle (29, 34), die das jeweilige Zertifikat für das jeweilige technische Gerät (2, 3, 4, 5a, 5b, 5c, 6) ausgestellt hat, sowie aller übergeordneter Zertifizierungsstellen (29, 34) umfassen.

5. Verfahren nach einem der vorangegangenen Ansprüche, bei dem die Informationen eine jeweilige Firmwareversion, eine Seriennummer, einen Aktualisierungsbedarf einer Betriebssoftware, einen Herstellernamen, eine Gerätefamilie, eine IP-Adresse, eine MAC-Adresse, einen Zeitpunkt einer Originalitätsprüfung und/oder einen Zeitpunkt einer manuell durchgeführten Identifizierung des jeweiligen technischen Gerätes (2, 3, 4, 5a, 5b, 5c, 6) umfassen.

6. Leitsystem (16) für eine technische Anlage, insbesondere Prozess- oder Fertigungsanlage, das dazu ausgebildet ist, ein Verfahren gemäß einem der vorangegangenen Ansprüche durchzuführen.

7. Technisches Modul (1), aufweisend eine Mehrzahl von technischen Geräten (2, 3, 4, 5a, 5b, 5c, 6), eine, insbesondere als OPC UA ausgebildete, Schnittstelle (8) und ein computerimplementiertes Modulinventar (9), welches technische Modul (1) zu einer Integration in ein Leitsystem (16) gemäß Anspruch 6 für eine technische Anlage, insbesondere Prozess- oder Fertigungsanlage, ausgebildet ist, wobei in dem computerimplementierten Modulinventar (9) des technischen Moduls (1) Informationen hinterlegt sind, die für eine Identifizierung der technischen Geräte (2, 3, 4, 5a, 5b, 5c, 6) des technischen Moduls (1) durch einen Abruf der Informationen über die Schnittstelle (8) durch das Leitsystem (16) ausgebildet sind, und welche Informationen Zertifikate umfassen, anhand derer die Identifizierung des jeweiligen technischen Gerätes (2, 3, 4, 5a, 5b, 5c, 6) erfolgen kann.

8. Technisches Modul (1) nach Anspruch 7, bei dem die Zertifikate von einer Zertifizierungsstelle (29, 34) eines Herstellers des technischen Moduls (1) ausgestellt worden sind.

9. Technisches Modul (1) nach Anspruch 7 oder 8, bei dem die Informationen Zertifikatsketten für die technischen Geräte (2, 3, 4, 5a, 5b, 5c, 6) umfassen, welche jeweils ein Zertifikat derjenigen Zertifizierungsstelle (29, 34), die das jeweilige Zertifikat für das jeweilige technische Gerät (2, 3, 4, 5a, 5b, 5c, 6) ausgestellt hat, sowie aller übergeordneter Zertifizierungsstellen umfassen.

10. Technisches Modul (1) nach einem der Ansprüche 7 bis 9, bei dem die Informationen eine jeweilige Firmwareversion, eine Seriennummer, einen Aktualisierungsbedarf einer Betriebssoftware, einen Herstellernamen, eine Gerätefamilie, eine IP-Adresse, eine MAC-Adresse, einen Zeitpunkt einer Originalitätsprüfung und/oder einen Zeitpunkt einer manuell durchgeführten Identifizierung des jeweiligen technischen Gerätes v(2, 3, 4, 5a, 5b, 5c, 6) umfassen.

11. Technisches Modul (1) nach einem der Ansprüche 7 bis 10, bei dem die Informationen die strukturellen und inhaltlichen Anforderungen der VDI/VDE/NAMUR Richtlinie 2658 mit Stand zum Anmeldezeitpunkt der vorliegenden Patentanmeldung erfüllen.

12. Technisches Modul (1) nach einem der Ansprüche 7 bis 11, welches einen computerimplementierten Registrierungsdienst (31) aufweist, welcher dazu ausgebildet ist, aufgrund einer manuellen Aufforderung oder automatisiert zu bestimmten Zeitpunkten innerhalb des technischen Moduls (1) die Informationen bezüglich der technischen Geräte (2, 3, 4, 5a, 5b, 5c, 6) zu ermitteln und in dem computerimplementierten Modulinventar (9) zu hinterlegen.

13. Technisches Modul (1) nach Anspruch 12, bei dem der Registrierungsdienst (31) dazu ausgebildet ist, durch einen Austausch eines der technischen Geräte (2, 3, 4, 5a, 5b, 5c, 6) in dem technischen Modul (1) dazu getriggert zu werden, die Informationen bezüglich der technischen Geräte (2, 3, 4, 5a, 5b, 5c, 6) zu ermitteln und in dem computerimplementierten Modulinventar (9) zu hinterlegen.

## Claims

1. Method for generating an operator control and monitoring and/or an automation by way of a control system (16) for a technical installation, in particular a manufacturing or process installation, wherein the control system (16) has an operator station server (17) and an operator station client (18), the method comprising:
a) integrating a technical module (1), which represents a self-contained technical unit, into the control system (16) functioning as a higher-level control level, wherein the technical module (1) has a plurality of technical devices (2, 3, 4, 5a, 5b, 5c, 6), a computer-implemented module inventory (9) and an interface (8), which in particular is designed in the form of OPCC UA, wherein the control system (16), in the course of the integration, retrieves information from the computer-implemented module inventory (9) of the technical module (1) via the interface (8) and stores said information in a computer-implemented control system inventory (30) of the control system (16) realised separately from the technical module (1), said information being designed to identify the technical devices (2, 3, 4, 5a, 5b, 5c, 6) of the technical module (1) by way of the control system (16), and said information comprising certificates, on the basis of which the identification of the respective technical device (2, 3, 4, 5a, 5b, 5c, 6) can be carried out,
b) generating the operator control and monitoring and/or the automation for the technical installation taking into consideration the information, stored in the computer-implemented control system inventory (30), in relation to the technical module (1).

2. Method according to claim 1, in which the control system (16) automatically evaluates a validity of the certificates and if one of the certificates is invalid excludes the technical module (1) from the operator control and monitoring, or the automation for the technical installation.

3. Method according to claim 1 or 2, wherein the certificates were issued by a certification authority of a manufacturer of the technical module (1).

4. Method according to one of claims 2 or 3, in which the information includes certificate chains for the technical devices (2, 3, 4, 5a, 5b, 5c, 6), which in each case include a certificate from the certification authority (29, 34) which issued the respective certificate for the respective technical device (2, 3, 4, 5a, 5b, 5c, 6), as well as from all higher-level certification authorities (29, 34).

5. Method according to one of the preceding claims, in which the information includes a respective firmware version, a serial number, a need for updating of operating software, a manufacturer's name, a device family, an IP address, a MAC address, a time of an originality check and/or a time of a manually performed identification of the respective technical device (2, 3, 4, 5a, 5b, 5c, 6).

6. Control system (16) for a technical installation, in particular a process or manufacturing installation, which is designed to perform a method in accordance with one of the preceding claims.

7. Technical module (1), having a plurality of technical devices (2, 3, 4, 5a, 5b, 5c, 6), an interface (8), which in particular is designed in the form of OPCC UA, and a computer-implemented module inventory (9), said technical module (1) being designed to be integrated into a control system (16) according to claim 6 for a technical installation, in particular a process or manufacturing installation, wherein information is stored in the computer-implemented module inventory (9) of the technical module (1) and is designed for identification of the technical devices (2, 3, 4, 5a, 5b, 5c, 6) of the technical module (1) by retrieving the information via the interface (8) by way of the control system (16), and said information comprises certificates, on the basis of which the identification of the respective technical device (2, 3, 4, 5a, 5b, 5c, 6) can be carried out.

8. Technical module (1) according to claim 7, in which the certificates were issued by a certification authority (29, 34) of a manufacturer of the technical module (1).

9. Technical module (1) according to claim 7 or 8, in which the information includes certificate chains for the technical devices (2, 3, 4, 5a, 5b, 5c, 6), which in each case include a certificate from the certification authority (29, 34) which issued the respective certificate for the respective technical device (2, 3, 4, 5a, 5b, 5c, 6), as well as from all higher-level certification authorities.

10. Technical module (1) according to one of claims 7 to 9, in which the information includes a respective firmware version, a serial number, a need for updating of operating software, a manufacturer's name, a device family, an IP address, a MAC address, a time of an originality check and/or a time of a manually performed identification of the respective technical device (2, 3, 4, 5a, 5b, 5c, 6).

11. Technical module (1) according to one of claims 7 to 10, in which the information meets the structural and substantive requirements of the VDI/VDE/NAMUR guideline 2658 as of the filing date of the present patent application.

12. Technical module (1) according to one of claims 7 to 11, which has a computer-implemented registration service (31) which is designed to determine, on the basis of a manual request or automatically at particular times, within the technical module (1) the information in respect of the technical devices (2, 3, 4, 5a, 5b, 5c, 6) and to store it in the computer-implemented module inventory (9).

13. Technical module (1) according to claim 12, in which the registration service (31) is designed to be triggered when one of the technical devices (2, 3, 4, 5a, 5b, 5c, 6) in the technical module (1) is replaced, to determine the information in respect of the technical devices (2, 3, 4, 5a, 5b, 5c, 6) and to store it in the computer-implemented module inventory (9).

## Revendications

1. Procédé de production d'une commande et observation et/ou d'une automatisation par un système (16) de conduite d'une installation technique, en particulier d'une installation de fabrication ou de processus, dans lequel le système (16) de conduite a un operator station server (17) et un operator station client (18), le procédé comprenant :
a) intégration d'un module (1) technique, qui représente une unité technique fermée, dans le système (16) de conduite fonctionnant en tant que plan de commande supérieur hiérarchiquement, dans lequel le module (1) technique a une pluralité d'appareils (2, 3, 4, 5a, 5b, 5c, 6) techniques, un inventaire (9) de module mis en œuvre par ordinateur et une interface (8), constituée en particulier en OPC UA, dans lequel le système (16) de conduite appelle, dans le cadre de l'intégration de l'inventaire (9) de module mis en œuvre par ordinateur du module (1) technique, par l'intermédiaire de l'interface (8), des informations et les met en mémoire dans un inventaire (30) du système (16) de conduite mis en œuvre par ordinateur et réalisé séparément du module (1) technique, lesquelles informations sont constituées pour une identification des appareils (2, 3, 4, 5a, 5b, 5c, 6) techniques du module (1) technique par le système (16) de conduite, et lesquelles informations comprennent des certificats à l'aide desquels l'identification de l'appareil (2, 3, 4, 5a, 5b, 5c, 6) technique respectif peut s'effectuer,
b) production de la commande et observation et/ou de l'automatisation de l'installation technique en tenant compte des informations du module (1) technique mises en mémoire dans l'inventaire (30) du système de conduite mis en œuvre par ordinateur.

2. Procédé suivant la revendication 1, dans lequel le système (16) de conduite évalue de manière automatisée une validité des certificats et, dans le cas où l'un des certificats n'est pas valable, exclut le module (1) technique de la commande et l'observation ou de l'automatisation de l'installation technique.

3. Procédé suivant la revendication 1 ou 2, dans lequel les certificats ont été établis par un poste de certification d'un fabriquant du module (1) technique.

4. Procédé suivant l'une des revendications 2 ou 3, dans lequel les informations comprennent des chaînes d'identification pour les appareils (2, 3, 4, 5a, 5b, 5c, 6) techniques, qui comprennent respectivement un certificat du poste (29, 34) de certification, qui a établi le certificat respectif pour l'appareil (2, 3, 4, 5a, 5b, 5c, 6) technique respectif, ainsi que de tous les postes (29, 34) de certification supérieurs hiérarchiquement.

5. Procédé suivant l'une des revendications précédentes, dans lequel les informations comprennent une version firmware respective, un numéro de série, un besoin de mise à jour d'un logiciel de fonctionnement, un nom de fabricant, une famille d'appareils, une adresse IP, une adresse MAC, un instant d'un contrôle d'origine et/ou un instant d'une identification effectuée manuellement de l'appareil (2, 3, 4, 5a, 5b, 5c, 6) technique respectif.

6. Système (16) de conduite d'une installation technique, en particulier d'une installation de processus ou de fabrication, qui est constituée pour effectuer un procédé suivant l'une des revendications précédentes.

7. Module (1) technique, comportant une pluralité d'appareils (2, 3, 4, 5a, 5b, 5c, 6) techniques, une interface (8) constituée, en particulier en OPC UA, et un inventaire (9) de module mis en œuvre par ordinateur, lequel module (1) technique est constitué pour une intégration dans un système (16) de conduite, suivant la revendication 6, d'une installation technique, en particulier d'une installation de processus ou de fabrication, dans lequel, dans l'inventaire (9) de module mis en œuvre par ordinateur du module (1) technique, sont mises en mémoire des informations, qui sont constituées, pour une identification des appareils (2, 3, 4, 5a, 5b, 5c, 6) du module (1) technique, par un appel par le système (16) de conduite, des informations par l'intermédiaire de l'interface (8) et lesquelles informations comprennent des certificats, à l'aide desquels l'identification de l'appareil (2, 3, 4, 5a, 5b, 5c, 6) technique peut s'effectuer.

8. Module (1) technique suivant la revendication 7, dans lequel les certificats ont été établis par un poste (29, 34) de certification d'un fabricant du module (1) technique.

9. Module (1) technique suivant la revendication 7 ou 8, dans lequel les informations comprennent des chaînes d'identification pour les appareils (2, 3, 4, 5a, 5b, 5c, 6) techniques, qui comprennent respectivement un certificat du poste (29, 34) de certification, qui a établi le certificat respectif pour l'appareil (2, 3, 4, 5a, 5b, 5c, 6) technique respectif, ainsi que de tous les postes de certification supérieurs hiérarchiquement.

10. Module (1) technique suivant l'une des revendications 7 à 9, dans lequel les informations comprennent une version firmware respective, un numéro de série, un besoin de mise à jour d'un logiciel de fonctionnement, un nom de fabricant, une famille d'appareils, une adresse IP, une adresse MAC, un instant d'un contrôle d'origine et/ou un instant d'une identification effectuée manuellement de l'appareil (2, 3, 4, 5a, 5b, 5c, 6) technique respectif.

11. Module (1) technique suivant l'une des revendications 7 à 10, dans lequel les informations satisfont les exigences structurelles et de contenu de la directive VDI/VDE/NAMUR 2658 valable à l'instant de dépôt de la présente demande de brevet.

12. Module (1) technique suivant l'une des revendications 7 à 11, qui a un service (31) d'enregistrement mis en œuvre par ordinateur, qui est constitué pour, sur la base d'une invitation manuelle ou de façon automatisée, déterminer, à des instants déterminés dans le module (1) technique, les informations en ce qui concerne les appareils (2, 3, 4, 5a, 5b, 5c, 6) techniques et les mettre en mémoire dans l'inventaire (9) de module mis en œuvre par ordinateur.

13. Module (1) technique suivant la revendication 12, dans lequel le service (31) d'enregistrement est constitué pour être déclenché par un échange de l'un des appareils (2, 3, 4, 5a, 5b, 5c, 6) dans le module (1) technique, pour déterminer les informations en ce qui concerne les appareils (2, 3, 4, 5a, 5b, 5c, 6) techniques et pour les mettre en mémoire dans l'inventaire (9) de module mis en œuvre par ordinateur.
